# EUROPEAN PATENT SPECIFICATION

(11) **EP 3 812 320 B1**
(45) Date of publication and mention of the grant of the patent: **31.12.2025**
(21) Application number: 20203286.8
(22) Date of filing: 22.10.2020
(51) Int. Cl.: B65G 59/04, B65G 47/91, B65G 47/82

(54) **DEPALLETISING MACHINE**
VORRICHTUNG ZUM ABSTAPELN
MACHINE DE DÉPALETTISATION

(30) Priority: 22.10.2019 IT 201900019538; 25.09.2020 IT 202000022717
(43) Date of publication of application: 28.04.2021
(73) Proprietor: OMA S.R.L., 37069 Villafranca di Verona (VR) (IT)
(72) Inventor: BALDI, Eros, 37069 VILLAFRANCA DI VERONA (VR) (IT); BALDI, Fedra, 37069 VILLAFRANCA DI VERONA (VR) (IT); BALDI, Fulvio, 37069 VILLAFRANCA DI VERONA (VR) (IT)
(74) Representative: Studio Torta S.p.A.

(56) References cited:
- EP-A1- 1 308 405
- WO-A1-2019/097442
- CN-A- 107 235 334
- DE-A1- 102015 208 586
- FR-A1- 2 794 426
- JP-A- 2000 044 042
- JP-A- 2016 094 280
- JP-A- H1 120 948
- US-A- 3 206 041
- US-A- 3 697 112

## Description

### CROSS-REFERENCE TO RELATED APPLICATIONS

This patent application claims priority from Italian patent application no. 102019000019538 filed on 22/10/2019 and Italian patent application no. 102020000022717 filed on 25/09/2020.

### TECHNICAL FIELD

The present invention relates to a depalletizing machine.

In more detail, the present invention relates to a compact depalletizing machine for pallets of glass bottles, tins, cans for beverages and the like. Use to which the following disclosure will make explicitly reference without however losing its generality.

### BACKGROUND ART

As is known, in the field of packaging machines there are several models of depalletizing machines that are capable of unpacking a pallet of tins or cans in a completely automated manner, providing at the outlet a succession of single tins or cans, ready to be sent to other machines.

In more detail, the pallets of tins and the pallets of cans are normally made up of a given number of layers of tins or cans stacked one on top of the other, and resting on a large wooden platform generally rectangular or square in shape, so as to form, once packed, a single block readily transportable. Each layer of tins or cans, on the other hand, is made up of a given number of rows of tins or cans closely packed to one another, which are arranged resting on a large cardboard support tray or sheet which, in turn, rests on the layer of tins or cans immediately underneath.

The most common depalletizing machines for pallets of tins and cans currently on the market comprise: an elevating platform, on which the pallet to be unpacked is arranged; a loose-products storage shelf which is stationary alongside the elevating platform, at a predetermined height from the ground generally greater than 2 meters, and is dimensioned so as to be able to receive an entire layer of tins or cans; and a transversal pusher blade, oblong in shape, which is arranged in a horizontal position on the opposite side of the elevating platform with respect to the loose-products storage shelf, at a height from the ground slightly greater than that of the loose-products storage shelf.

The elevating platform is capable of step lifting the pallet to be unpacked, so as to bring, each time, the upper layer of the pallet to be unpacked at the level of the loose-products storage shelf.

The transversal pusher blade, on the other hand, is movable horizontally at the top of the pallet to be unpacked, so as to arrange itself in abutment against the lateral side of the layer of the pallet located at the height of the loose-products storage shelf, i.e. the upper layer of the pallet, and then push the upper layer of the pallet horizontally toward the loose-products storage shelf, so as to transfer the entire layer of tins or cans *en bloc* onto the loose-products storage shelf.

Finally the depalletizing machines described above are provided with an outlet conveyor, which is capable of progressively removing/clearing the tins or the cans from the loose-products storage shelf, providing at outlet a succession of loose tins or cans.

Unfortunately, nowadays the depalletizing machines for pallets of tins and cans described above have very bulky dimensions, which prevent their installation in the bottling or canning lines of small dimensions.

In addition, although ensuring a high productivity per hour, the depalletizing machines described above are not normally used for unpacking pallets of glass bottles and the like, because the layer of bottles has a considerable weight and the pusher blade would thus have to exert a very high horizontal thrust, incompatible with the drive mechanisms normally used in this context.

In other words, if the pusher blade were to move the entire layer of glass bottles at the same time, the electric motors to be used to move the blade would have excessive and cost-inefficient weight, size and power.

Furthermore, since the loose-products storage shelf is much higher with respect to the inlet of the next machine of the bottling or canning line, the outlet conveyor of the depalletizing machine normally has a particularly complicated and expensive structure, with the increase in the costs that this entails.

EP1308405 A1 discloses the preamble of claim 1 by disclosing a depalletizing machine for pallets of bottles wherein the loose-products storage shelf is arranged at a comfortable height from the ground, so as to simplify the structure of the outlet conveyor.

This depalletizing machine moreover comprises a movable products-transferring platform which is dimensioned to receive/accommodate an entire layer of bottles coming from the pallet resting on the elevating platform, and is vertically movable beside the elevating platform between an upper loading position and a spaced-below lower unloading position. In the upper loading position, the products-transferring platform is located at same high of the upper layer of the pallet resting on the elevating platform, and is thus capable of loading/receiving the whole upper layer of bottles. In the lower unloading position, the products-transferring platform is aligned to the loose-products storage shelf, so as to allow the horizontally pushing of the whole layer of bottles towards the adjacent loose-products storage shelf.

Unfortunately, in case of pallets of tins and cans, experimental tests have shown that the depalletizing machines described above, during the unpacking of the pallet, have the tendency to irreparably damage a small, yet not insignificant number of tins and cans, with the increase in the machine operating costs that this entails.

In more detail, having to move, by horizontally pushing, an entire layer of tins or cans onto the loose-products storage shelf, the pusher blade has to exert, on the tins or on the cans of the upper layer of the pallet, a relatively high horizontal thrust that unfortunately acts almost entirely on the row of tins or cans forming the lateral side of the layer, with the problems that this entails.

The tins and the cans, in fact, are normally made of a relatively soft and malleable metal, therefore, in the event of jammings during the sliding of the layer of the pallet, the pusher blade can press against the lateral wall of the tins or of the cans with such a force that the wall is irreparably deformed.

### DISCLOSURE OF INVENTION

Aim of the present invention is to provide a depalletizing machine for pallets of bottles, tins and cans, which is more compact than the current ones and which can also remedy the drawbacks listed above.

According to the present invention there is thus provided a depalletizing machine as defined in Claim 1 and preferably, though not necessarily, in any of the claims depending thereon.

### BRIEF DESCRIPTION OF THE DRAWINGS

The present invention will now be described with reference to the accompanying drawings, which illustrate a non-limiting embodiment example thereof, wherein:
- Figures 1, 2 and 3 are axonometric views of a depalletizing machine realized according to the teachings of the present invention, with parts in section and parts removed for clarity's sake;
- Figure 4 is a lateral view of the depalletizing machine illustrated in Figures 1, 2 and 3, with parts in section and parts removed for clarity's sake;
- Figure 5 is a perspective view of the upper part of the depalletizing machine illustrated in the preceding figures, with parts in section and parts removed for clarity's sake;
- Figures 6 to 13 schematically show the operation of the depalletizing machine illustrated in Figures 1 to 5;
- Figure 14 is a lateral view of the upper part of a first variant of the depalletizing machine illustrated in the preceding figures, with parts in section and parts removed for clarity's sake;
- Figure 15 is a front view of the gripping head of the depalletizing machine illustrated in Figure 14, with parts removed for clarity's sake;
- Figure 16 is a perspective view of the upper part of a second variant of the depalletizing machine illustrated in the preceding figures, with parts removed for clarity's sake; whereas
- Figure 17 is a sectional view of a component of the gripping head of the depalletizing machine illustrated in Figure 16, with parts removed for clarity's sake.

### BEST MODE FOR CARRYING OUT THE INVENTION

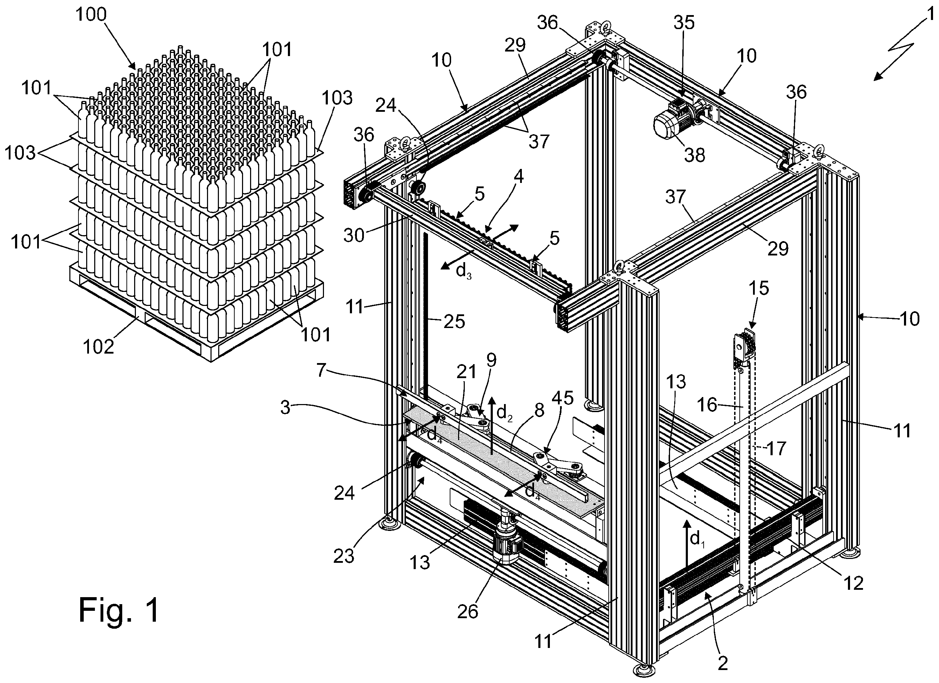

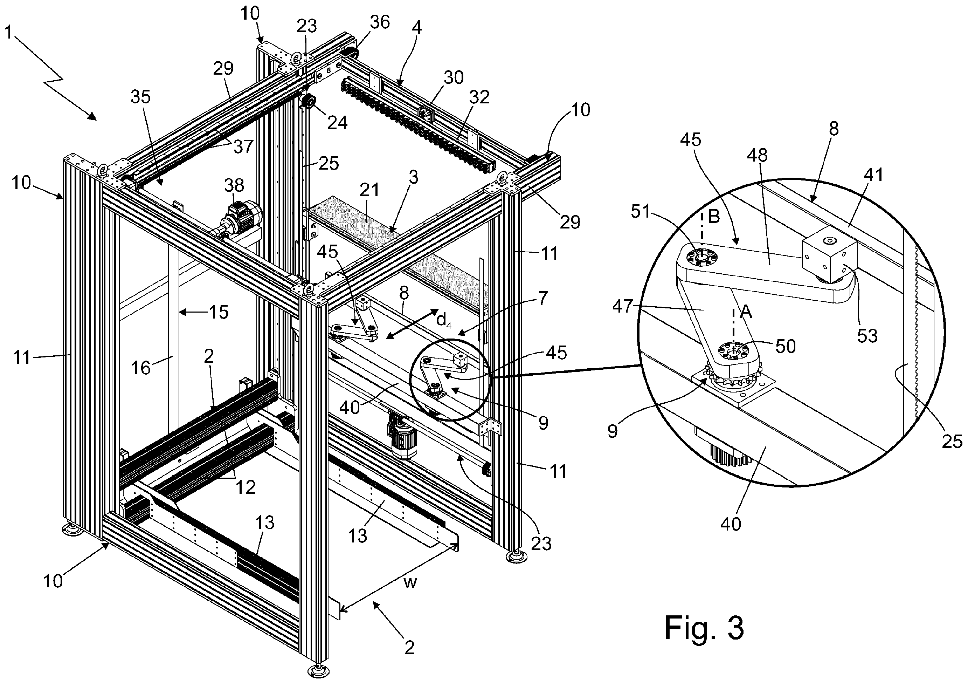

With reference to Figures 1 to 5, reference numeral 1 indicates, as a whole, a depalletizing machine adapted to unstack a pallet of products 100 in an automated manner, providing at outlet a succession of loose products, ready to be used by other machines.

In other words, the depalletizing machine 1 is adapted to receive at inlet a pallet of products 100 and to provide at outlet a succession of loose products.

In more detail, the depalletizing machine 1 is particularly adapted to unstack a pallet 100 of bottles 101 in an automated manner, providing at outlet a succession of loose bottles 101, ready to be used by other machines.

The depalletizing machine 1 is thus particularly adapted to unstack in automated manner an object formed by a given number of neat and compact layers of bottles 101 stacked one on top of the other, and resting on a large transport platform 102, usually rectangular or square in shape.

Each layer of bottles 101, in addition, is basically formed by a given number of rows of bottles 101 that are packed close together, and are arranged resting on a support board or tray 103 which, in turn, rests on the layer of bottles 101 immediately underneath.

Clearly the depalletizing machine 1 could also be used to unstack in automated manner a pallet of tins, cans for beverages or similar products, providing at outlet a succession of loose products, ready to be used by other machines.

With reference to Figures 1, 2, 3 and 4, firstly the depalletizing machine 1 comprises: an elevating platform 2, which is adapted to receive, resting thereon, the pallet to be unpacked 100, and is capable of moving vertically so as to lift, from the ground, the pallet to be unpacked 100 and align/carry the upper layer of the pallet to be unpacked 100 with/to a substantially horizontal, raised reference plane P which is located at a predefined height h₁ from the ground and where the unpacking of the layers of the pallet occurs; and a movable products-transferring platform 3, which is dimensioned so as to be able to temporarily receive/ accommodate a single row of bottles 101 coming from the pallet 100 stationary on the elevating platform 2, and which is vertically movable alongside the elevating platform 2, separately and independently with respect to the elevating platform 2.

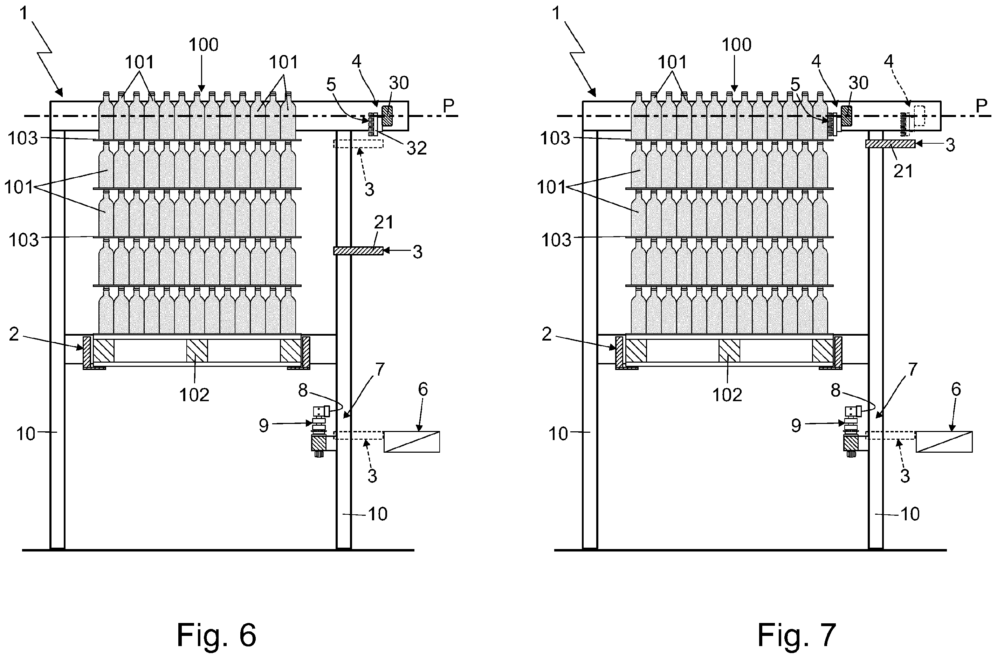

In more detail, the products-transferring platform 3 is vertically movable between a loading position (see Figures 7, 8, 9 and 12) in which the products-transferring platform 3 is aligned/substantially coplanar with the raised plane P and is thus capable of loading/receiving a row of bottles 101 belonging to the upper layer of the pallet to be unpacked 100, and an unloading position (see Figures 1, 10 and 11) in which the movable products-transferring platform 3 is located at a predetermined height from the ground h₂, spaced beneath the raised plane P, and is capable of unloading the row of bottles 101 previously loaded.

Preferably, the raised plane P is moreover located at a height from the ground h₁ comprised between 1,8 and 2,6 m (metres) and/or greater than the maximum height of the pallets 100 to be unpacked.

When in the unloading position, on the other hand, the products-transferring platform 3 is preferably located at a height h₂ comprised between 0,5 and 1,2 m (metres).

The depalletizing machine 1 moreover comprises a transversal gripping head 4, oblong in shape, which lies on the raised plane P, is provided with gripping means adapted to seize and firmly hold the bottles 101 of a row of bottles 101, and is movable forwards and backwards on the raised plane P between a first operating position in which the gripping head 4 is located beside the elevating platform 2, substantially vertically aligned with the products-transferring platform 3, and a second operating position (see Figures 7 to 11) in which the gripping head 4 is vertically aligned with the elevating platform 2, and is arranged adjacent to the bottles 101 forming a lateral row of the upper layer of the pallet 100 stationary on the elevating platform 2, so that the gripping means can seize and hold the bottles 101 of said lateral row.

In more detail, the gripping head 4 is laterally provided with vacuum gripping means 5 which are adapted to arrange themselves in abutment against the lateral side of the bottles 101 of said lateral row of bottles 101 of the upper layer of the pallet 100, and are capable of seizing and firmly holding, by vacuum, said bottles 101, taking hold of the side/trunk of said bottles 101.

In other words, the vacuum gripping means 5 are capable of adhering to the side/trunk of the bottles 101 regardless of the shape and/or size of the bottles 101.

Preferably, the vacuum gripping means 5 are moreover distributed on the lateral side of the gripping head 4, so as to be arranged resting on the lateral side of all the bottles 101 of a same/entire lateral row of bottles 101.

Clearly, the vacuum gripping means 5 are capable of seizing and firmly holding also tins, cans for beverages and other products.

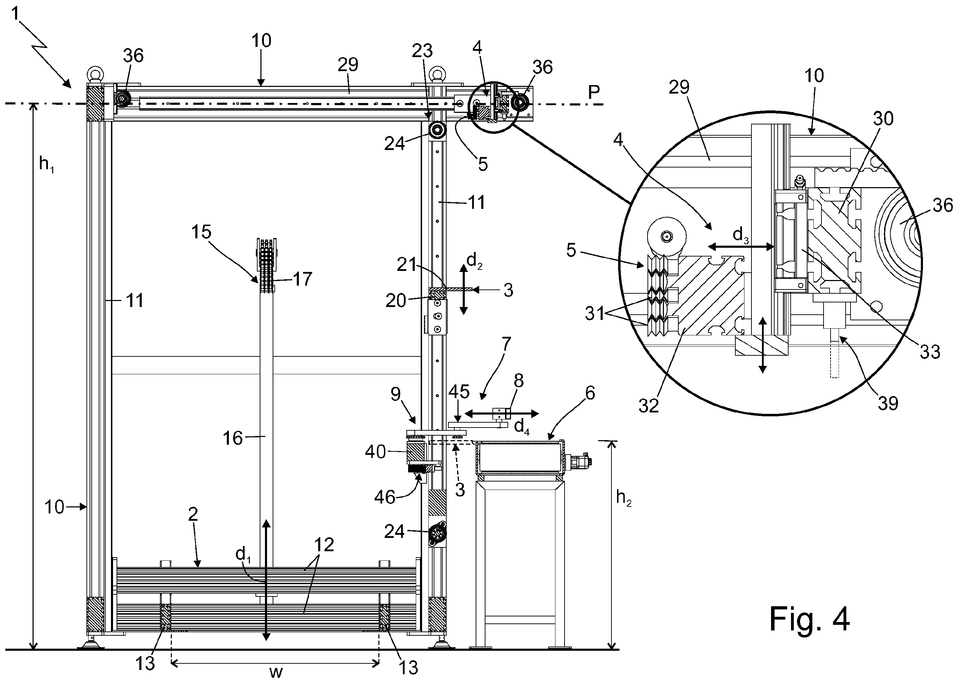

Preferably, the depalletizing machine 1 additionally comprises: an outlet conveyor 6 which is adapted to carry/ transfer the loose bottles 101 or other products to the outside of the depalletizing machine 1, and is located beneath the raised plane P, beside the vertical corridor engaged by the products-transferring platform 3 preferably on the opposite side with respect to the elevating platform 2, so that its products resting and/or feeding plane is horizontally aligned/flanked to the products-transferring platform 3 in the unloading position (see Figures 4, 10 and 11); and a products-shifting assembly 7, which is adapted to move, on command, the bottles 101 from the movable products-transferring platform 3 to the outlet conveyor 6, when the movable products-transferring platform 3 is horizontally aligned/flanks the products resting and/or feeding plane of the outlet conveyor 6, i.e. when the products-transferring platform 3 is arranged in the unloading position.

Preferably, the products-shifting assembly 7 additionally comprises: a transversal pusher blade 8, oblong in shape, which is arranged in a horizontal position beside the vertical corridor engaged by the products-transferring platform 3, at a height from the ground slightly greater than that of the products-transferring platform 3 in the unloading position and/or than that of the products resting and/or feeding plane of the outlet conveyor 6; and a preferably electrically or pneumatically operated, moving device 9 which is capable of moving the pusher blade 8 horizontally, preferably while keeping the pusher blade 8 constantly parallel to itself, so as to push the bottles 101 resting on the products-transferring platform 3 stationary in the unloading position, from the products-transferring platform 3 up to the outlet conveyor 6.

Preferably, the transversal pusher blade 8 is moreover substantially parallel to the gripping head 4.

In more detail, the transversal pusher blade 8 is arranged at a height from the ground slightly greater than the height h₂, so as to be movable above and more or less grazing the products-transferring platform 3 stationary in the unloading position and the products resting and/or feeding plane of the outlet conveyor 6.

Preferably, the pusher blade 8 is furthermore arranged on the opposite side of the vertical corridor engaged by the products-transferring platform 3 with respect to the outlet conveyor 6, while the moving device 9 is adapted to move the pusher blade 8 horizontally through the vertical corridor engaged by the products-transferring platform 3, so as to bring the pusher blade 8 in abutment against the entire row of bottles 101 resting on the products-transferring platform 3 stationary in the unloading position, and then push the row of bottles 101 horizontally onto the adjacent outlet conveyor 6.

With reference to Figures 1, 2, 3, 4 and 5, in the example shown, in particular, the depalletizing machine 1 is preferably provided with a rigid supporting framework 10, which is preferably made of metal material, and in more detail of metal beams firmly fixed to one another, and is adapted to firmly rest on, and optionally be anchored to, the ground.

The elevating platform 2 is preferably firmly fixed on the supporting framework 10 and is capable of moving/shifting freely on the supporting framework 10 in a substantially vertical direction d₁.

In more detail, the rigid supporting framework 10 preferably has a substantially parallelepiped-shaped, cage-like structure, and the elevating platform 2 is preferably movable vertically inside the supporting framework 10.

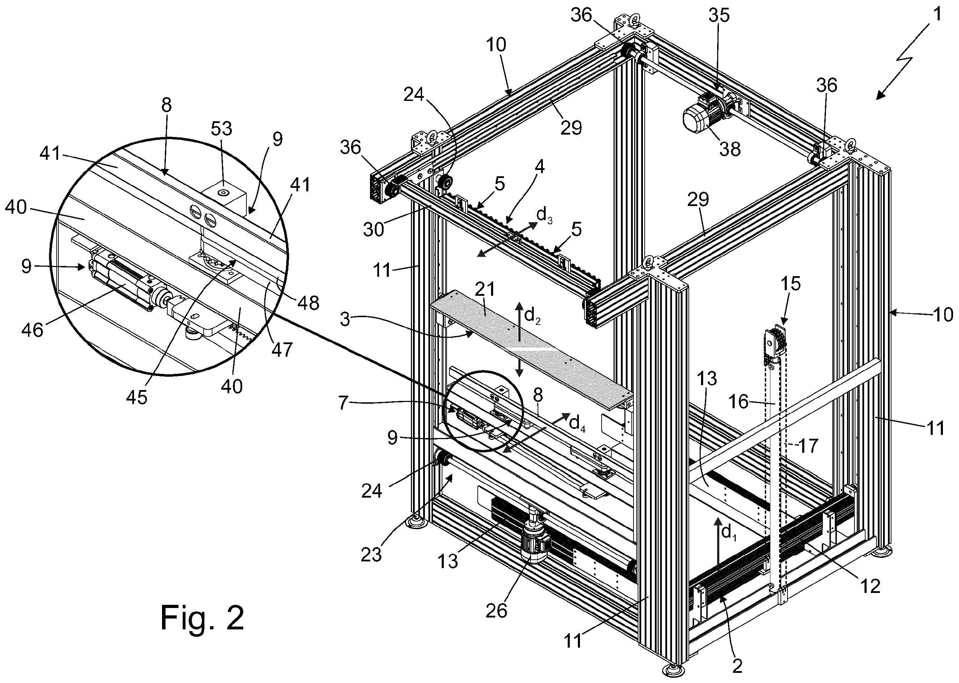

With reference to Figures 1 and 2, in particular the elevating platform 2 is preferably fixed in a vertically slidable manner on a pair of vertical uprights 11 of the supporting framework 10.

In more detail, in the example shown, the elevating platform 2 preferably comprises: a high-rigidity support crossbeam 12 preferably rectilinear and preferably made of metal material, which extends horizontally astride a pair of vertical uprights 11 of the supporting framework 10, and has the two ends fixed in a freely slidable manner on the same vertical uprights 11, so as to be able to move along the vertical uprights 11 in the direction d₁ while remaining constantly parallel to itself; and a high-rigidity pair of prongs 13 preferably rectilinear and preferably made of metal material, which extend cantilevered and horizontally from the support crossbeam 12 while remaining substantially parallel and aligned to one another.

Preferably, the depalletizing machine 1 additionally comprises a preferably electrically-, hydraulically- or pneumatically- operated, first drive assembly 15 which is adapted to move on command, and preferably also by step, the support crossbeam 12 of the elevating platform 2 along the supporting framework 10, in the direction d₁, so as to be able to vary/regulate, on command, the height of the elevating platform 2 from the ground underneath.

In other words, the drive assembly 15 is adapted to move the elevating platform 2 progressively upwards along the vertical uprights 11 of the supporting framework 10, so as to arrange, time after time, the upper layer of the pallet to be unpacked 100 at the height of the raised plane P.

In more detail, the drive assembly 15 preferably comprises: a hydraulic or pneumatic piston 16 which is fixed in a substantially vertical position on the supporting framework 10, preferably more or less equidistant from the two vertical uprights 11 flanking the support crossbeam 12; and a pulling chain 17 which is U-bent and is arranged in a vertical position, astride a cogwheel located on the upper end of the movable rod of piston 16. The pulling chain 17 has the two ends rigidly fixed, one to the support crossbeam 12 and the other to the supporting framework 10, so that the piston 16, by extracting its movable rod, can raise or lower the support crossbeam 12.

In other words, the drive assembly 15 uses a pulley mechanism for raising and lowering the support crossbeam 12.

With particular reference to Figure 4, preferably one or both prongs 13 of the elevating platform 2 are moreover butt fixed/coupled to the support crossbeam 12, or rather to the lateral side of the support crossbeam 12, with the capability of sliding horizontally along the support crossbeam 12 in a direction substantially parallel to the longitudinal axis of the support crossbeam 12 and orthogonal to the longitudinal axes of the prongs 13, so as to be able to vary/regulate at least the distance/axes-spacing w between the two prongs 13.

In other words, one or both prongs 13 of the elevating platform 2 are movable on the support crossbeam 12 while remaining parallel to themselves.

In addition, the elevating platform 2 optionally also includes a preferably electrically- or pneumatically-operated, regulating device (not shown in the figures) which is preferably fixed on the support crossbeam 12, and is adapted to selectively move one or both prongs 13 along the support crossbeam 12 so as to vary/regulate, on command, the position of one or both prongs 13 on the support crossbeam 12 and/or the distance/axes-spacing w between the two prongs 13 of the elevating platform 2.

With reference to Figures 1, 2, 3 and 4, the lateral products-transferring platform 3, on the other hand, is preferably firmly fixed on the supporting framework 10 beside the elevating platform 2, and is capable of moving/shifting freely on the supporting framework 10 in a substantially vertical direction d₂.

In more detail, analogously to the elevating platform 2, also the lateral products-transferring platform 3 is preferably fixed in a vertically slidable manner on a pair of vertical uprights 11 of the supporting framework 10.

In the example shown, in particular, the products-transferring platform 3 preferably comprises: a support crossbeam 20, preferably rectilinear and preferably made of metal material, which extends horizontally astride a second pair of vertical uprights 11 of the supporting framework 10, and has the two ends fixed in freely slidable manner on the same vertical uprights 11, so as to be able to move along the vertical uprights 11 in the direction d₂ while remaining constantly parallel to itself; and a preferably substantially rectangular-shaped, upper shelf 21 which is rigidly fixed above the support crossbeam 20, preferably with its longer sides parallel to the longitudinal axis of the beam, and is dimensioned so as to be able to receive/accommodate on itself an entire row of bottles 101 or other products.

Preferably, the depalletizing machine 1 is moreover provided with a second, preferably electrically- or pneumatically- operated, drive assembly 23 which is adapted to move, on command, the support crossbeam 20 of the products -moving platform 3 on the supporting framework 10, in direction d₂, i.e. vertically, so as to be able to align the upper shelf 21 of the products-transferring platform 3 alternately with the raised plane P or with the products resting and/or feeding plane of the outlet conveyor 6.

In other words, the drive assembly 23 is adapted to move the products-transferring platform 3 up and down along the vertical uprights 11 of supporting framework 10, between the loading position and the unloading position.

In more detail, the drive assembly 23 preferably comprises, on each vertical upright 11 of the supporting framework 10: a pair of toothed pulleys 24 that are coplanar with one another, which are fixed in axially rotatable manner on the vertical upright 11, near the upper and lower ends of the vertical upright 11; and a belt 25 which is looped around the two toothed pulleys 24, so that the two rectilinear sections of the belt 25 are parallel to the longitudinal axis of the vertical upright 11.

Preferably, the drive assembly 23 additionally also comprises an electric motor 26, which is preferably fixed cantilevered on a stiffening crossbeam connecting the two vertical uprights 11, and is mechanically connected to one of the two toothed pulleys 24 of each pair of toothed pulleys 24 via a drive shaft, so as to be able to selectively drive into rotation the two toothed pulleys 24 in both rotation directions.

The two ends of the support crossbeam 20 of vertically-movable platform 3 are each mechanically connected to a respective belt 25 of the drive assembly 23, so as to move along the respective vertical uprights 11 of the supporting framework 10 together with the belts 25.

With reference to Figures 1, 2, 3, 4 and 5, the gripping head 4, in turn, is preferably firmly fixed at the top of the supporting framework 10 and is capable of moving/shifting freely on the supporting framework 10, over the elevating platform 2 and the movable products-transferring platform 3, in a substantially horizontal direction d₃.

In more detail, the supporting framework 10 is preferably provided, at the top, with a pair of horizontal beams 29 which lie substantially on the raised plane P and extends one alongside the other, in direction d₃; and the gripping head 4 is preferably fixed in slidable manner on such horizontal beams 29.

Preferably, the gripping head 4 moreover comprises a support crossbeam 30, preferably rectilinear and preferably made of metal material, which extends horizontally and orthogonally to direction d₃, astride of the two horizontal beams 29 of supporting framework 10, and has the two ends fixed in freely slidable manner to the same horizontal beams 29 so as to be able to move along the horizontal beams 29, in the direction d₃, while remaining constantly parallel to itself.

The vacuum gripping means 5 of gripping head 4 are fixed on the support crossbeam 30, so as to jut out from a lateral side of the crossbeam in a substantially horizontal direction, so as to be able to arrange themselves in abutment against the lateral side of the bottles 101 that are at the height of the raised plane P.

Preferably the vacuum gripping members 5 of gripping head 4 are moreover vertically movable on the gripping head 4, or rather on the support crossbeam 30.

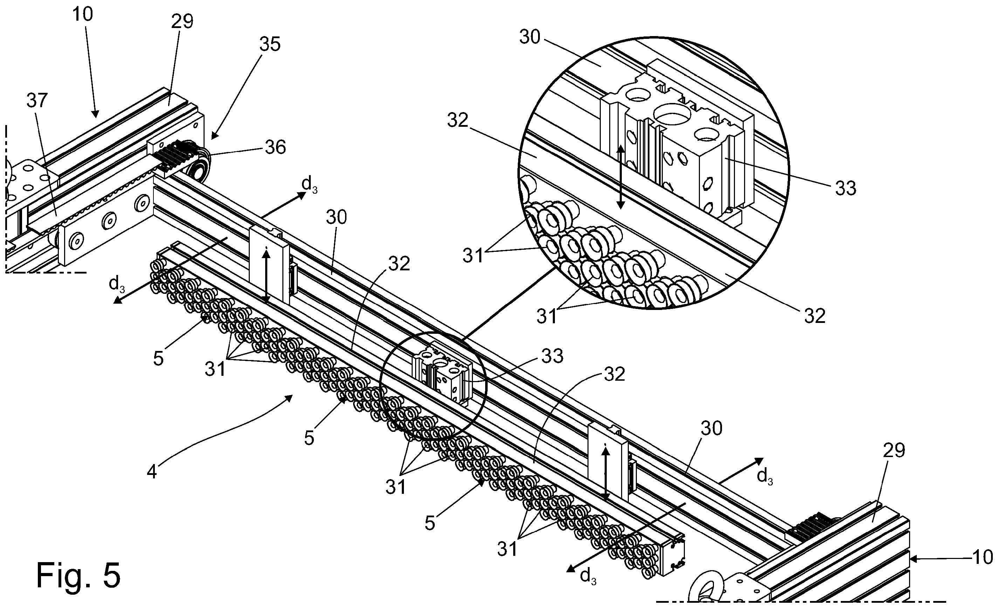

In more detail, with particular reference to Figure 5, the vacuum gripping means 5 preferably comprise a plurality /multitude of suction cups 31 of small dimensions, which are fixed on a side of the support crossbeam 30, so as to jut out in a substantially horizontal direction and one beside the other, and are connected to an air-suction line (not shown in the figures) of the pneumatic circuit of the machine, so as to be able to stick by low-pressure on the surface of the bottles 101 on which they rest.

In addition, the suction cups 31 of gripping head 4 are preferably distributed on the lateral side of the support crossbeam 30, one tightly beside/adjacent and substantially coplanar to the other, preferably in a substantially uniform and optionally seamless manner, over a section of the support crossbeam 30 of a given length not lower than the maximum width of the pallets 100 that can be unpacked by the machine.

In more detail, the suction cups 31 of gripping head 4 are preferably arranged according to a quincunx pattern.

Preferably the air-suction line of the machine pneumatic circuit is moreover structured so as to be able to regulate the flowrate of the air that is sucked in through the suction cups 31, so as to be able to vary/control the adhesion capacity of the suction cups 31 on surface of the bottle 101 on which the suction pads rest.

Clearly the suction cups 31 are capable of adhering/ sticking by vacuum also to tins, cans and the like.

Preferably, the gripping head 4 is moreover adapted to slightly raise the bottles 101 of the row from the support board or tray 103 directly underneath.

In more detail, the gripping head 4 is preferably provided with an auxiliary suction-cups carrying bar or longeron 32, preferably rectilinear and preferably made of metal material, which is arranged parallel and adjacent to the support crossbeam 30, and is firmly fixed to the support crossbeam 30 with the capability of shifting vertically while remaining substantially parallel to itself; and with a preferably electrically- or pneumatically- operated, actuator device 33, which is preferably located on the support crossbeam 30, and is capable, on command, of temporarily lifting and/or lowering (i.e. moving vertically) the suction -cups carrying longeron 32 a few centimetres or millimetres with respect to the support crossbeam 30.

The actuator device 33 is thus capable of varying, on command, the distance of the suction-cups carrying longeron 32 from the raised plane P, and consequently also the distance of the suction-cups carrying longeron 32 from the support board or tray 103 of the upper layer of the pallet to be unpacked 100.

In the example shown, in particular, the actuator device 33 preferably consists of a single- or double-acting pneumatic piston, which is interposed between the suction-cups carrying longeron 32 and the support crossbeam 30, and is capable of, selectively and alternatively, lifting and/or lowering the suction-cups carrying longeron 32 with respect to the support crossbeam 30 preferably by approximately 40 mm (millimetres).

The suction cups 31 are rigidly fixed on the suction-cups carrying longeron 32 so as to jut out from the lateral side of the longeron that is on the opposite side with respect to the support crossbeam 30.

In other words, the suction cups 31 are arranged on the side of the suction-cups carrying longeron 32, which, in turn, is arranged alongside the support crossbeam 30, and is firmly fixed to the support crossbeam 30 with the capability of moving vertically with respect to the support crossbeam 30 while remaining parallel to itself and to the crossbeam.

Clearly the suction-cups carrying longeron 32 preferably has a length greater than the maximum width of the pallets 100 that can be unpacked by the machine.

In the example shown, moreover, the suction-cups carrying longeron 32 is preferably internally hollow and its inner cavity communicates directly with the air-suction line of the pneumatic circuit of the machine.

The suction cups 31, on the other hand, are preferably fixed to the suction-cups carrying longeron 32 so as to communicate with the inner cavity of the suction-cups carrying longeron 32.

With reference to Figures 1, 2, 3, 4 and 5, in addition, the depalletizing machine 1 is preferably also provided with a third, preferably electrically- or pneumatically-operated, drive assembly 35 which is adapted to move, on command, the support crossbeam 30 of gripping head 4 on the supporting framework 10, in the direction d₃, so as to be able to alternately place the gripping head 4 in the first operating position in which the gripping head 4 is vertically aligned with the movable products-transferring platform 3, and in the second operating position in which the gripping head 4 is vertically aligned with the elevating platform 2 and arranges the suction cups 31 resting on the bottles 101 forming the lateral row of the upper layer of the pallet 100 stationary on the elevating platform 2.

In other words, the drive assembly 35 is adapted to move the gripping head 4 forwards and backwards along the horizontal beams 29 of supporting framework 10, i.e. on the raised plane P, between the first and the second operating position.

In more detail, the drive assembly 35 preferably comprises, on each horizontal beam 29 of supporting framework 10: a pair of pulleys 36 coplanar to one another, which are fixed in axially rotatable manner on the horizontal beam 29 of supporting framework 10, close to the two ends of the horizontal beam 29; and a toothed belt 37 which is looped around the two pulleys 36, so that the two rectilinear sections of the belt 37 are parallel to the longitudinal axis of the horizontal beam 29.

Preferably the drive assembly 35 moreover also comprises an electric motor 38 which is preferably fixed cantilevered on a stiffening crossbeam rigidly connecting to one another the two horizontal beams 29 of supporting framework 10, and is mechanically connected to one of the two pulleys 36 of each pair of pulleys 36 via a drive shaft, so as to be able to selectively drive into rotation the two pulleys 36 in both rotation directions.

The two ends of the support crossbeam 30 of gripping head 4 are each mechanically connected to a respective belt 37 of drive assembly 35, so as to move horizontally along the two horizontal beams 29 of supporting framework 10 together with the belts 37.

Preferably, the gripping head 4 is moreover provided with one or more extractable board-pushing appendages 39 which, on command, extend cantilevered from the support crossbeam 30, or alternatively from the suction-cups carrying longeron 32, toward the ground, so as to reach the laying plane of the support board or tray 103 of the upper layer of pallet 100, and thus be able to arrange themselves in abutment against the lateral edge of the support board or tray 103.

In the example shown, in particular, the extractable board-pushing appendages 39 preferably consist of a pair of electrically- or pneumatically- operated, vertical retractable pins which are fixed on the support crossbeam 30, or alternatively on the suction-cups carrying longeron 32, with the capability of moving, on command, between an extracted/lowered position (see Figure 4) in which the retractable pins jut out downwards so as to reach the laying plane of the support board or tray 103 of the upper layer of pallet 100, and thus arrange themselves in abutment against the lateral edge of the support board or tray 103; and a retracted/raised position in which the retractable pins are at a distance above the laying plane of the support board or tray 103 of the upper layer of pallet 100, and thus cannot reach the support board or tray 103 of the upper layer of the pallet 100.

With reference to Figures 1, 2, 3 and 4, also the products-shifting assembly 7 is preferably rigidly fixed on the supporting framework 10.

In more detail, the moving device 9 of products-shifting assembly 7 is preferably rigidly fixed on a transversal connecting beam 40 of supporting framework 10, which extends horizontally at a predefined height from the ground, beside the vertical corridor engaged by the products-transferring platform 3, and which rigidly connect the two vertical uprights 11 supporting the movable products-transferring platform 3.

Preferably, the connecting beam 40 is also substantially parallel to the support crossbeam 30 of the gripping head 4.

The moving device 9, in addition, is preferably adapted to move the transversal pusher blade 8 in a horizontal direction d₄ substantially perpendicular to the longitudinal axis of pusher blade 8 and/or to the longitudinal axis of beam 40 of supporting framework 10 and/or to the longitudinal axis of the movable products-transferring platform 3.

The pusher blade 8, on the other hand, is preferably suspended above the connecting beam 40, beside the moving device 9.

In more detail, the pusher blade 8 of product-shifting assembly 7 preferably includes a rectilinear bar 41 of given length, preferably made of metal material and preferably with a tubular structure with a square cross-section, which has an axial length greater than the nominal length of the rows of bottles 101 to be moved, and extends horizontally so as to be parallel to the connecting beam 40 and perpendicular to the horizontal direction d₄.

With particular reference to Figures 2, 3 and 4, the moving device 9, on the other hand, is adapted to move the rectilinear bar 41 in direction d₄, always keeping it parallel to itself, and preferably comprise: a pair of articulated arms 45 with pantograph movement, which are mounted movable above the connecting beam 40, so as to be able to open/spread apart in a scissor-like manner on a substantially horizontal plane, in the direction d₄, and which directly support the rectilinear bar 41; and a preferably electrically-operated, command servomotor 46 which is preferably located on the connecting beam 40, and which is mechanically connected to both articulated arms 45 so as to be able to open and close them in a synchronized manner.

In more detail, each articulated arm 45 with pantograph movement preferably comprises: a rigid lower half-arm 47, preferably rectilinear and preferably made of metal material, which extends horizontally and has its proximal end pivotally jointed in axially rotatable manner onto the connecting beam 40 of supporting framework 10, so as to be able to freely rotate about a first vertical axis A; an rigid upper half-arm 48, preferably rectilinear and preferably made of metal material, which extends horizontally and has its proximal end pivotally jointed in axially rotatable manner to the distal end of lower half-arm 47, so as to be able to freely rotate about a second vertical axis B; and a set of gears which is adapted to transmit, to the upper half-arm 48, the rotational motion with which the lower half-arm 47 rotates about axis A, so that the upper half-arm 48 is forced to rotate with respect to the lower half-arm 47, about axis B, with an angular velocity twice the angular velocity with which the lower half-arm 47 rotates about axis A and with a direction of rotation opposite to the latter.

In other words, the set of gears is adapted to transmit to the upper half-arm 48 the rotational motion with which the lower half-arm 47 rotates about axis A, so as to coordinate the scissor-like opening of the half-arms 47 and 48 with the rotation of the lower half-arm 47 about axis A.

Even more specifically, the proximal end of lower rigid half-arm 47 is preferably keyed in angularly rigid manner to the upper end of a first connecting pin 50, preferably made of metal material, which extends coaxially to axis A and is inserted in pass-through and axially rotatable manner into the connecting beam 40 of supporting framework 10.

The proximal end of upper rigid half-arm 48, on the other hand, is preferably keyed in angularly rigid manner to the upper end of a second connecting pin 51, preferably made of metal material, which extends coaxially to axis B and is inserted in pass-through and axially rotatable manner into the distal end of lower half-arm 47.

The set is preferably adapted to drive into rotation the pin 51 with an angular velocity twice the angular velocity with which the pin 50 rotates about axis A inside the connecting beam 40, with a rotating direction opposite to the latter.

In more detail, the set of gears preferably comprises: a first toothed pulley or wheel which is fitted in freely rotatable manner on the pin 50 and is fixed in angularly rigid manner to the connecting beam 40; a second toothed pulley or wheel which is fitted in angularly rigid manner to the pin 51, and has a diameter half that of the first toothed pulley or wheel; and a toothed belt or chain looped around the two aforementioned toothed pulleys or wheels.

The servomotor 46, in turn, is preferably mechanically connected to the lower half-arm 47 of both articulated arms 45, or rather to the pin 50 of both articulated arms 45, so as to be able to rotate both lower half-arms 47 about the respective axes A.

The pusher blade 8 of the products-shifting assembly 7, on the other hand, preferably comprises two locking clamps 53 that are fixed on the rear side of rectilinear bar 41 and are fitted and locked in rigid manner to the upper end of two further vertical support pins, each of which is fitted in axially rotatable and idle manner into the distal end of the upper half-arm 48 of the articulated arm 45 with pantograph movement.

With reference to Figure 4, the outlet conveyor 6, on the other hand, preferably consists of a preferably electrically-operated, linear belt conveyor which is preferably arranged resting on the ground, alongside the supporting framework 10, or rather beside the vertical uprights 11 supporting the products-transferring platform 3, in a substantially horizontal position, so that its products-conveying plane is substantially coplanar with the upper shelf 21 of the products-transferring platform 3 in the unloading position.

In other words, the linear belt conveyor is preferably arranged beside the supporting framework 10, so that its products-conveying plane is located at a height from the ground substantially equal to height h₂.

Clearly, the outlet conveyor 6, or rather the linear belt conveyor, could also be firmly fixed to the supporting framework 10, at a predetermined height from the ground, next to the vertical uprights 11 supporting the products-transferring platform 3.

Finally, the depalletizing machine 1 preferably also comprises an electronic control device (not shown in the figures) which is adapted to command the various driving members of the machine (i.e. the drive assemblies 15, 23, 35; the moving device 9 of products-shifting assembly 7, or rather the servomotor 46; and the actuator device 33) and, if present, also the extractable board-pushing appendages 39 of gripping head 4, so as to be able to unstack the pallet 100 temporarily resting on the elevating platform 2 in an automated manner.

Preferably, the machine electronic control device is moreover capable of commanding/regulating also the air-suction line of the pneumatic circuit of the machine, so as to be able to regulate/vary also the flowrate of the air sucked in through the suction cups 31.

Optionally, the electronic control device is furthermore capable of commanding/regulating also the regulating device of elevating platform 2.

Operation of depalletizing machine 1 will be described in the following assuming that the operator has already regulated the position and/or the axes-spacing w between the two prongs 13 of the elevating platform 2, and that he/she has subsequently placed the pallet 100 to be unpacked resting on the elevating platform 2, or rather on the prongs 13 of elevating platform 2.

With reference to Figure 6, the electronic control device of depalletizing machine 1 firstly raises the elevating platform 2 so as to bring the upper layer of the pallet to be unpacked 100 at the height of the raised plane P; and more or less simultaneously moves the products-transferring platform 3 into the loading position, at the height of the raised plane P.

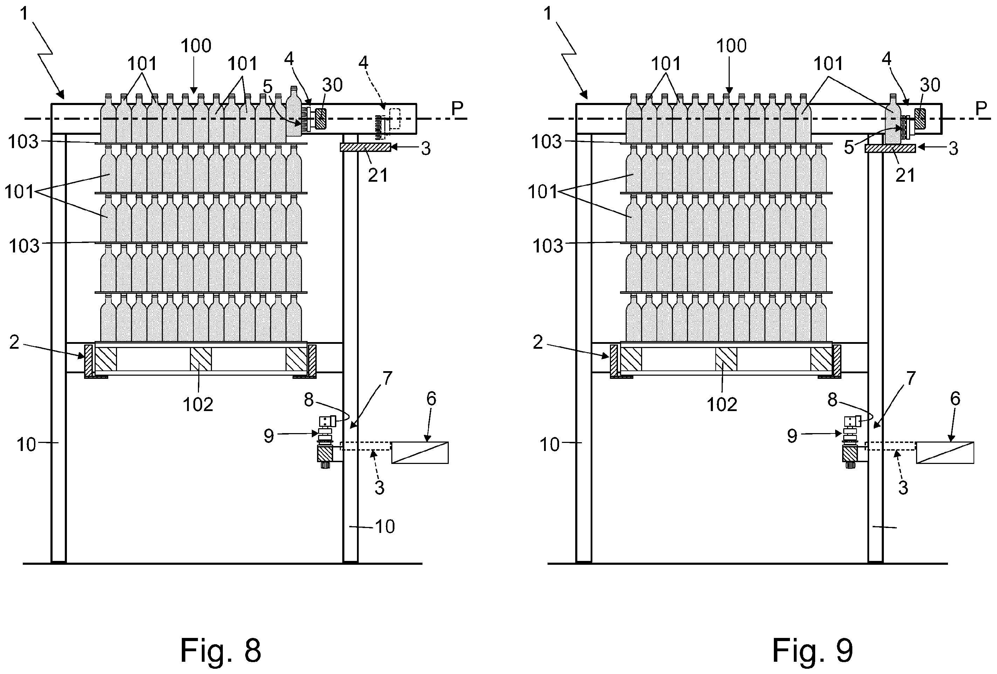

With reference to Figures 7 and 8, after bringing the upper layer of the pallet to be unpacked 100 to the height of the raised plane P, the electronic control device of depalletizing machine 1 moves the gripping head 4 from the first to the second operating position (see Figure 7) so as to allow the gripping members 5 to seize and hold the bottles 101; then it slightly raises the gripping members 5 (see Figure 8) so as to lift the bottles 101 from the tray 103 underneath; and brings the gripping head 4 back into the first operating position so as to carry the row of bottles 101 over the products-transferring platform 3.

With reference to Figure 9, after bringing/aligning the gripping head 4 with the products-transferring platform 3, the electronic control device of depalletizing machine 1 deactivates the gripping means 5 so as to rest and release the bottles 101 on the products-transferring platform 3, preferably after lowering the gripping means 5.

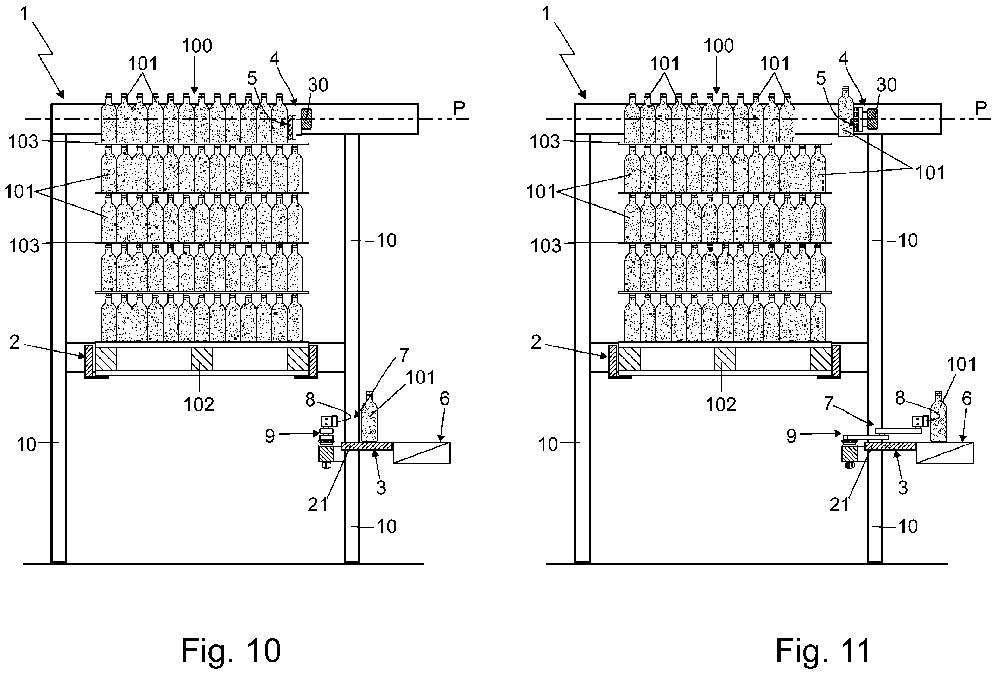

With reference to Figure 10, after leaving the bottles 101 on the products-transferring platform 3, the electronic control device of depalletizing machine 1 moves/lowers the products-transferring platform 3 and arrange it in the unloading position; and, preferably more or less simultaneously, moves the gripping head 4 back into the second operating position so as to allow the gripping means 5 to seize and hold a new row of bottles 101.

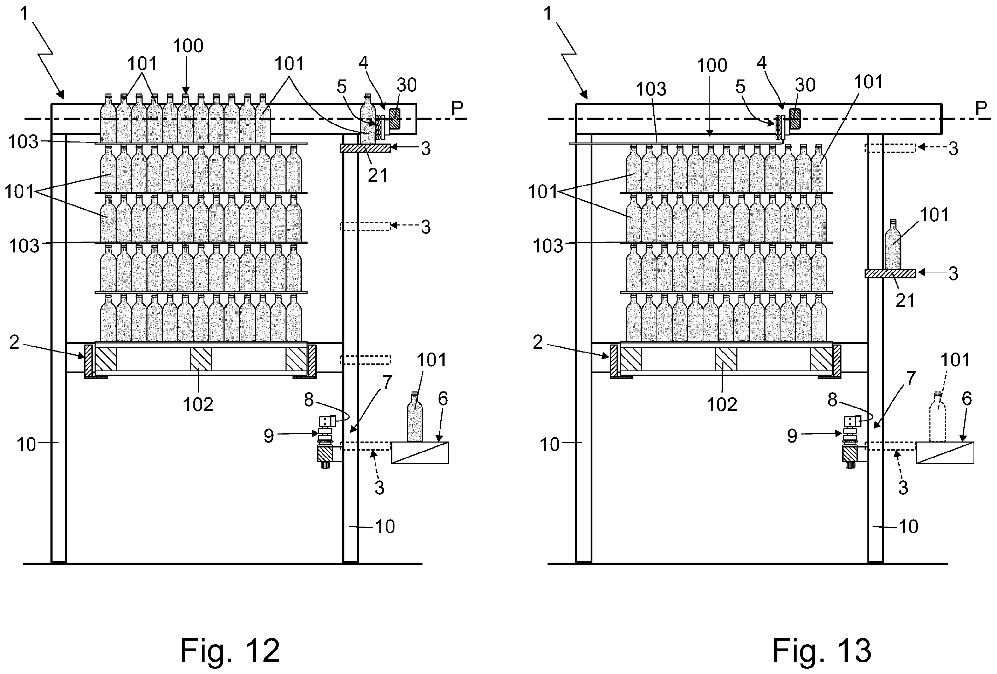

With reference to Figures 11 and 12, when the products-transferring platform 3 reaches the unloading position and is arranged beside the outlet conveyor 6, the electronic control device of depalletizing machine 1 activates the products-shifting assembly 7, or rather activates the moving device 9 that moves horizontally the transversal pusher blade 8, so as to push the entire row of bottles 101 resting on the products-transferring platform 3, from the products-transferring platform 3 up to the outlet conveyor 6.

With reference to Figure 12, when the row of bottles 101 has moved from the products-transferring platform 3 to the outlet conveyor 6, the electronic control device of depalletizing machine 1 brings the products-shifting assembly 7 back into the initial position, or rather commands the moving device 9 to bring the transversal pusher blade 8 back into the initial position, and then lifts/moves the products-transferring platform 3 upwards and arranges it back into the loading position, so as to be able to receive a second row of bottles 101 from the gripping head 4 which, in turn, has returned to the first operating position.

With reference to Figure 13, when the gripping head 4 has removed the last row of bottles 101 from the upper layer of the pallet 100, the electronic control device of depalletizing machine 1 lowers the board-pushing appendage(s) 39 of the gripping head 4 and then moves the gripping head 4 horizontally over the elevating platform, so as to put the board-pushing appendage(s) 39 in abutment against the lateral edge of the support board or tray 103 of the upper layer of the pallet 100, and then push/remove said support board or tray 103 from the top of the pallet 100.

Clearly the support board or tray 103 of the upper layer of the pallet 100 can be also manually removed by the person/ operator supervising the operation of the machine.

After removing the support board or tray 103 from the top of the pallet 100, the electronic control device of depalletizing machine 1 finally moves the elevating platform 2 upwards again, so as to bring the new upper layer of the pallet to be unpacked 100 at the height of raised plane P.

Clearly, thanks to the vacuum gripping members 5, or rather thanks to the multitude of small-sized suction cups 31, the depalletizing machine 1 is capable of unpacking a pallet formed by layers of tins, cans for beverages and the like in the same manner.

The advantages deriving from the particular structure of the depalletizing machine 1 are remarkable and numerous.

Firstly, lacking a loose-products collecting shelf dimensioned to accommodate an entire layer of products, the depalletizing machine 1 has overall dimensions significantly lower than those of a traditional depalletizing machine.

In addition, being provided with a row of vacuum gripping member 5 capable of adhering autonomously to the side of the bottles 101 regardless of the form and/or size of the bottles, the gripping head 4 does not have to be reconfigured according to the size and/or spacing of the bottles 101 forming a row, with all operating advantages that this entails.

In addition, thanks to the presence of the movable products-transferring platform 3, the outlet conveyor 6 of depalletizing machine 1 has a relatively simple and cost-effective structure, and is located at a reduced height from the ground, therefore it can be easily connected to the inlet of the succeeding machine in the bottling or canning line, with all savings that this entails.

Finally, thanks to the separation of the horizontal translational motion (gripping head 4) from the vertical translational motion (movable products-transferring platform 3), the depalletizing machine 1 has a productivity per hour significantly greater than that of other similar-sized depalletizing machines, with all advantages that this entails.

In addition, having to transfer a small number of bottles 101 at a time, the depalletizing machine 1 does not require high-power/large-size motors, with all savings that this entails.

It is finally clear that changes and variations may be made to the depalletizing machine 1 herein described and illustrated without, however, departing from the scope of the present invention. Clearly in the variants, the parts in common are designated, where possible, by the same reference numbers used in the embodiment described in the foregoing.

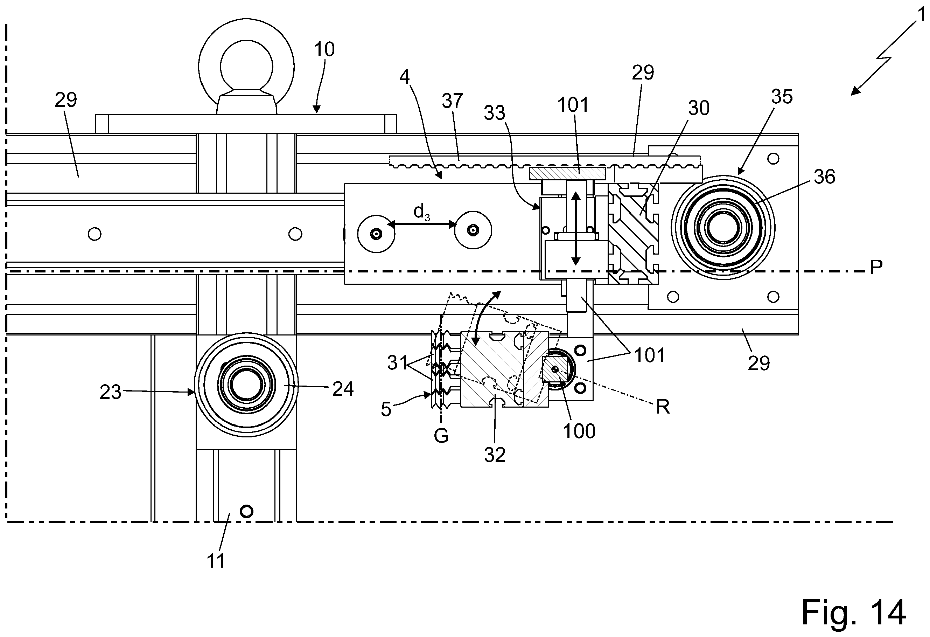

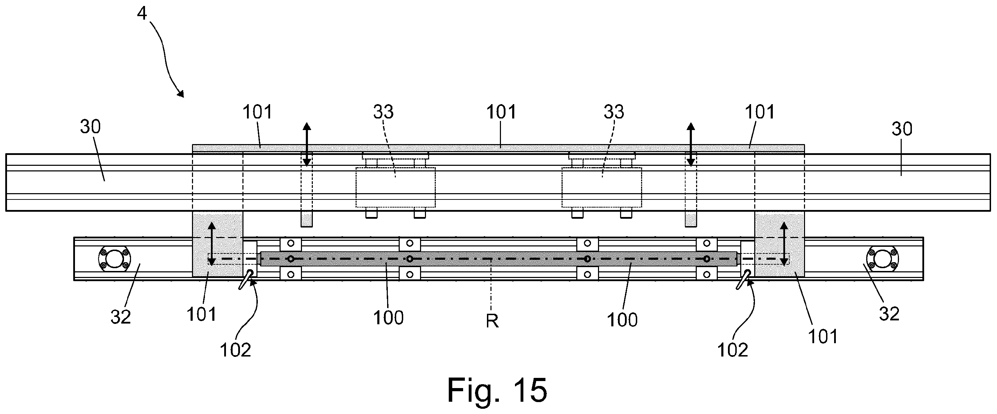

For example, with reference to Figures 14 and 15, in a more sophisticated embodiment, the gripping head 4 is preferably also provided with a regulating mechanism that allows varying/regulating, automatically or manually, the angle of inclination of the laying plane G of the suction cups 31 with respect to the vertical. In this way, the vacuum gripping means 5 can additionally seize and firmly hold bottles 101 with a substantially truncated cone-shaped trunk.

In other words, in this embodiment, the suction-cups carrying longeron 32 of gripping head 4 is preferably firmly fixed to the support crossbeam 30 also with the capability of pivoting/rotating by a few degrees (i.e. less than 180°) upwards and/or downwards, about a reference axis R that is substantially parallel to the longitudinal axes of the support crossbeam 30 and of the suction-cups carrying longeron 32, and preferably also spaced from at least one of said longitudinal axes.

In more detail, the suction-cups carrying longeron 32 is preferably rigidly fixed on the side of an auxiliary support shaft 100 that extends coaxial to axis R, adjacent and parallel to the suction-cups carrying longeron 32, and is fixed in axially rotatable manner to an intermediate rigid bracket 101 which, in turn, is firmly fixed to the support crossbeam 30 with the capability of moving vertically while keeping the support shaft 100 constantly parallel to itself.

In the example shown, in particular, the support shaft 100 is preferably fixed to the intermediate rigid bracket 101 with the capability of rotating about the axis R, by a few tens of degrees upwards and/or downwards.

Clearly in this embodiment, the actuator device 33 is adapted to move the intermediate rigid bracket 101 vertically with respect to the support crossbeam 30.

Preferably, the gripping head 4 is furthermore provided with a manually-operated locking member 102 which is capable of selectively blocking/preventing rotation of support shaft 100 with respect to the intermediate rigid bracket 101.

Acting on locking member 102, the user can therefore temporarily unblock the support shaft 100 and manually rotate the suction-cups carrying longeron 32 with respect to the axis R, so as to change the angle of inclination of the laying plane of the suction cups 31 with respect to the vertical.

In addition or alternatively to the blocking member 102, the gripping head 4 may comprise an electrically- or pneumatically- operated rotary actuator (not shown in the figures), which is mechanically connected to the support shaft 100 and capable of varying/modifying, on command, the angular position of support shaft 100.

Clearly in a simplified embodiment, the lifting/lowering of the suction-cups carrying longeron 32 with respect to the support crossbeam 30 could also be achieved by the sole rotation of the suction-cups carrying longeron 32 about the axis R, in the upward direction.

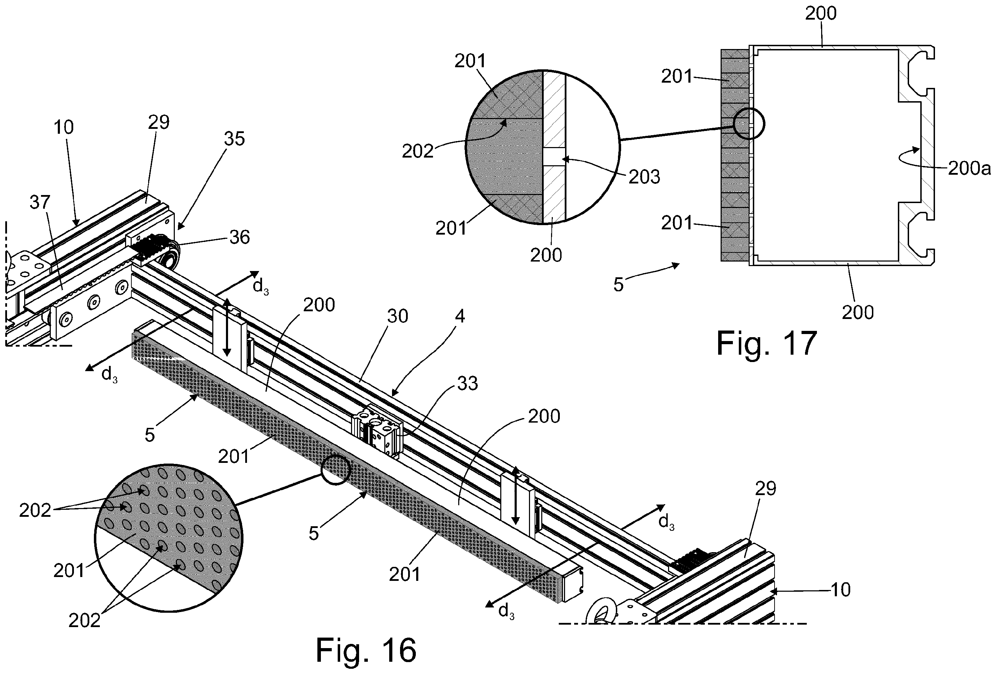

With reference to Figures 16 and 17, in a further alternative embodiment, the vacuum gripping means 5 comprise: a substantially rectilinear and internally hollow, auxiliary beam 200 preferably made of metal material, which extends parallel and adjacent to the support crossbeam 30, and is firmly fixed to the support crossbeam 30 with the capability of moving vertically and/or rotating with respect to the support crossbeam 30 while remaining substantially parallel to itself; and a mat of soft and elastically deformable material 201 of a thickness preferably ranging between 5 and 30 mm (millimetres), which is preferably made of polymer foam material, and is firmly fixed on the side of auxiliary beam 200 on the opposite side with respect to the support crossbeam 30, so as to cover a section of auxiliary beam 200 of a given length and not less than the maximum width of the pallets 100 that can be unpacked by the machine.

The internal cavity 200a of auxiliary beam 200 is connected to the air-suction line of the machine pneumatic circuit so as to be maintained at a pressure lower than the ambient pressure.

The mat of soft and elastically deformable material 201, on the other hand, is preferably made of elastomeric material, and is provided with a series/multitude of preferably rectilinear, transversal through ducts 202 that end at the wall of the auxiliary beam 200, where small through holes 203 are provided for putting the transversal ducts 202 in communication with the internal cavity of the auxiliary beam 200, so as to create a vacuum inside the various transversal through ducts 202. Preferably, the transversal through ducts 202 moreover have a substantially circular cross-section, with a nominal diameter preferably less than 10 mm (millimetres) and more suitably less than 5 mm.

Clearly in this embodiment, the actuator device 33 is adapted to move the auxiliary beam 200 vertically with respect to the support crossbeam 30, so as to vary the distance of auxiliary beam 200 from reference plane P.

Also in this case, the actuator device 33 may be structured to temporarily raise and/or lower the auxiliary beam 200 with respect to the support crossbeam 30 by means of a rotation of the auxiliary beam 200 about axis R, in the upward direction.

In addition, in a less sophisticated and not-shown embodiment, instead of being provided with one or more extractable board-pushing appendages 39, the gripping head 4 may be provided with one or more fixed board-pushing appendages that permanently protrude cantilevered downwards from the suction-cups carrying longeron 32 or from the auxiliary beam 200.

In this case, the actuator device 33 of gripping head 4 is capable of lowering, on command, the suction-cups carrying longeron 32 or the auxiliary beam 200 with respect to the support crossbeam 30, so as to temporarily bring the fixed board-pushing appendages at the height of the laying plane of the support board or tray 103 of the upper layer of the pallet 100 stationary on the elevating platform 2.

Finally, in a further non-shown embodiment, elevating platform 2 may comprise, in place of the support crossbeam 12 and of the two prongs 13, a horizontal platform preferably substantially rectangular in shape, which is preferably arranged inside the supporting framework 10, and is fixed to the vertical uprights 11 of supporting framework 10 with the capability of moving along the vertical uprights 11 in direction d₁, i.e. vertically, while remaining constantly substantially horizontal.

In this variant, the pallet to be unpacked 100 is arranged so as to rest on the horizontal platform, and the moving assembly 15 is adapted to progressively move the horizontal platform upwards so as to place, each time, the upper layer of the pallet to be unpacked 100 at the height of the raised plane P.

## Claims

1. A depalletizing machine (1) comprising an elevating platform (2) which is adapted to receive, resting thereon, the pallet to be unpacked (100) and is adapted to move vertically so as to lift, from the ground, the pallet to be unpacked (100) and align the upper layer of the pallet with a raised reference plane (P);
the depalletizing machine being **characterised by** additionally comprising: a movable products-transferring platform (3) which is dimensioned so as to receive/accommodate a single row of products (101) coming from the pallet (100) stationary on the elevating platform (2), and is vertically movable alongside the elevating platform (2) between a loading position in which the products-transferring platform (3) is aligned with said reference plane (P) and is capable of loading/receiving a row of products (101), and an unloading position in which the movable products-transferring platform (3) is located spaced beneath said reference plane (P) and is capable of unloading the row of products (101) previously loaded; and a gripping head (4) that lies on said reference plane (P), is provided with gripping means (5) adapted to seize and firmly hold the products (101) of a row of products, and is movable forwards and backwards on said reference plane (P) between a first operating position wherein the gripping head (4) is located beside the elevating platform (2), substantially vertically aligned with the products-transferring platform (3), and a second operating position in which the gripping head (4) is vertically aligned with the elevating platform (2), and is arranged adjacent to the products (101) forming a lateral row of the upper layer of the pallet, so that the gripping means (5) can seize and hold the products (101) of said lateral row;
the gripping head (4) being laterally provided with vacuum gripping means (5) that are adapted to arrange themselves in abutment against the lateral side of the products (101) of said lateral row of products, are capable of holding the same products (101) by gripping on the sides of the same products (101), and are movable vertically on said gripping head (4).

2. Depalletizing machine according to Claim 1, wherein said vacuum gripping means (5) are distributed on the lateral side of the gripping head (4), so as to arrange themselves resting on the lateral side of all products (101) of said lateral row of products (101).

3. Depalletizing machine according to Claim 1 or 2, **characterised by** additionally comprising: an outlet conveyor (6) which is adapted to carry/transfer the loose products (101) to the outside of the machine, and is located beneath said reference plane (P), beside the vertical corridor engaged by the products-transferring platform (3), so that its products resting and/or feeding plane is arranged beside the movable products-transferring platform (3) in said unloading position; and a products-shifting assembly (7) which is adapted to move the products (101) from the movable products-transferring platform (3) to the outlet conveyor (6) when the movable products-transferring platform (3) is located in said unloading position.

4. Depalletizing machine according to Claim 3, wherein the products-shifting assembly (7) comprises: a transversal pusher blade (8) which is arranged in horizontal position beside the vertical corridor engaged by the movable products-transferring platform (3); and moving means (9) which are adapted to horizontally move the pusher blade (8) over the movable products-transferring platform (3) in the unloading position, so as to push the products (101) resting on the movable products-transferring platform (3), from the movable products-transferring platform (3) up to the outlet conveyor (6) .

5. Depalletizing machine according to Claim 4, wherein the pusher blade (8) is arranged on the opposite side of the vertical corridor engaged by the movable products-transferring platform (3) with respect to the outlet conveyor (6), and the moving means (9) are adapted to move the pusher blade (8) horizontally through said vertical corridor.

6. Depalletizing machine according to any one of the preceding claims, wherein the machine is provided with a rigid supporting framework (10) which is adapted to stably rests on, and optionally be anchored to, the ground; and wherein at least the movable products-transferring platform (3) and the gripping head (4) are mounted movable on said rigid supporting framework (10).

7. Depalletizing machine according to Claim 6, wherein the rigid supporting framework (10) has a cage-like structure and the elevating platform (2) is movable vertically inside said rigid supporting framework (10).

8. Depalletizing machine according to Claim 6 or 7, wherein the gripping head (4) comprises: a support crossbeam (30) which extends horizontally astride two horizontal beams (29) of said supporting framework (10), and has the two ends fixed in sliding manner to the same horizontal beams (29) so as to be able to move along the horizontal beams (29) while remaining parallel to itself; the vacuum gripping means (5) being fixed on a side of the support crossbeam (30), so as to jut out substantially horizontally in order to arrange themselves in abutment against the lateral side of the products (101) that are at the height of the reference plane (P).

9. Depalletizing machine according to Claim 8, wherein the vacuum gripping means (5) comprise a plurality/ multitude of suction-cups (31) that are fixed on a side of the support crossbeam (30) so as to jut out substantially horizontally and one beside the other, and are connected to an air-suction line so as to be able to stick by vacuum on surface of the products (101) on which they rest.

10. Depalletizing machine according to Claim 9, wherein the suction-cups (31) of the gripping head (4) are distributed in a substantially uniform manner on the side of a suction-cups carrying longeron (32) which, in turn, is fixed on said support crossbeam (30) with the capability of shifting vertically with respect to the support crossbeam (30) while remaining parallel to itself; the gripping head (4) being additionally provided with an actuator device (33) which is adapted to lift and/or lower the suction-cups carrying longeron (32) with respect to the support crossbeam (30), so as to vary the distance of the suction-cups carrying longeron (32) from said reference plane (P).

11. Depalletizing machine according to Claim 8, wherein the vacuum gripping means (5) comprise: an internally-hollow, auxiliary beam (200) which extends substantially parallel and adjacent to said support crossbeam (30), and is firmly fixed to said support crossbeam (30); and a mat of soft and elastically deformable material (201), which is firmly fixed on the side of the auxiliary beam (200) on the opposite side with respect to the support crossbeam (30); the mat of soft and elastically deformable material (201) being provided with a series/multitude of transversal through ducts (202) that end at the auxiliary beam (200) and communicate with the internal cavity of said auxiliary beam (200); the internal cavity (200a) of the auxiliary beam (200) being connected to an air-suction line so as to be able to be maintained at a pressure lower the ambient pressure.

12. Depalletizing machine according to Claim 11, wherein the auxiliary beam (200) is fixed on the support crossbeam (30) with the capability of moving vertically with respect to said support crossbeam (30) while remaining parallel to itself; the gripping head (4) being furthermore provided with an actuator device (33) which is adapted to lift and/or lower the auxiliary beam (200) with respect to the support crossbeam (30), so as to vary the distance of the auxiliary beam (200) from said reference plane (P).

13. Depalletizing machine according to any one of Claims from 7 to 12, wherein the vacuum gripping means (5) are fixed on said support crossbeam (30) with the capability of rotating/pivoting about a reference axis (R) substantially parallel to the longitudinal axis of the support crossbeam (30).

14. Depalletizing machine according to any one of Claims from 8 to 12, wherein the gripping head (4) additionally includes one or more board-pushing appendages (39) that are adapted to selectively reach the laying plane of the support board or tray (103) of the upper layer of the pallet (100), so as to rest on the lateral edge of the support board or tray (103).

15. Depalletizing machine according to any one of Claims from 6 to 14, wherein the movable products-transferring platform (3) is fixed in a vertically slidable manner on a first pair of vertical uprights (11) of the rigid supporting framework (10).

16. Depalletizing machine according to any one of Claims from 6 to 15, wherein the elevating platform (2) is fixed in a vertically slidable manner on a second pair of vertical uprights (11) of the rigid supporting framework (10).

17. Depalletizing machine according to Claim 16, wherein the elevating platform (2) comprises: a support crossbeam (12) that extends horizontally astride said second pair of vertical uprights, and has the two ends fixed in slidable manner on the same vertical uprights (11), so as to be able to move along the vertical uprights (11) while remaining parallel to itself; and a pair of prongs (13) that extend cantilevered and horizontally from the support crossbeam (12) while remaining substantially parallel and aligned with one another.

18. Depalletizing machine according to any one of Claims from 6 to 17, wherein the moving means (9) of the products-shifting assembly (7) are fixed on said rigid supporting framework (10) and comprise: a pair of articulated arms (45) with pantograph movement, which are mounted movable on top a transversal beam (40) of the rigid supporting framework (10) so as to be able to open/spread apart in a scissor-like manner, on a substantially horizontal plane, and which directly support said transversal pusher blade (8); and a servomotor (46) which is mechanically connected to both articulated arms (45) so as to be able to open and close them in a synchronised manner.

## Patentansprüche

1. Entpalettisiermaschine (1) mit einer Hubplattform (2), die angepasst ist, um die auszupackende Palette (100) darauf ruhend aufzunehmen, und die angepasst ist, um sich vertikal zu bewegen, um die auszupackende Palette (100) vom Boden anzuheben und die obere Schicht der Palette mit einer angehobenen Referenzebene (P) auszurichten;
wobei die Entpalettisiermaschine **dadurch gekennzeichnet ist, dass** sie zusätzlich umfasst: eine bewegliche Produkttransferplattform (3), die so bemessen ist, dass sie eine einzelne Reihe von Produkten (101) empfängt, die von der auf der Hubplattform (2) stationären Palette kommen, und vertikal entlang der Hubplattform (2) zwischen einer Beladeposition, in der die Produkttransferplattform (3) mit der Referenzebene (P) ausgerichtet ist und in der Lage ist, eine Reihe von Produkten (101) zu beladen/zu empfangen, und einer Entladeposition, in der sich die bewegliche Produkttransferplattform (3) im Abstand unterhalb der Referenzebene (P) befindet und in der Lage ist, die zuvor geladene Reihe von Produkten (101) zu entladen, bewegbar ist; und einen Greifkopf (4), der auf der Referenzebene (P) liegt, mit Greifmitteln (5) versehen ist, die angepasst sind, die Produkte (101) einer Reihe von Produkten zu ergreifen und fest zu halten, und auf der Referenzebene (P) zwischen einer ersten Betriebsposition, in der sich der Greifkopf (4) neben der Hubplattform (2) befindet, im Wesentlichen vertikal ausgerichtet mit der Produkttransferplattform (3), und eine zweite Betriebsposition vor- und rückwärts bewegbar sind, in der der Greifkopf (4) vertikal mit der Hubplattform (2) ausgerichtet ist und benachbart zu den Produkten (101) angeordnet ist, die eine seitliche Reihe der oberen Schicht der Palette bilden, so dass die Greifmittel (5) die Produkte (101) dieser seitlichen Reihe ergreifen und halten können;
wobei der Greifkopf (4) seitlich mit Vakuumgreifmitteln (5) versehen ist, die so angepasst sind, dass sie sich gegen die laterale Seite der Produkte (101) der seitlichen Reihe von Produkten anliegend anordnen, dieselben Produkte (101) durch Greifen an den Seiten derselben Produkte (101) halten können und vertikal auf dem Greifkopf (4) bewegbar sind.

2. Entpalettisiermaschine nach Anspruch 1, wobei die Vakuumgreifmittel (5) auf der lateralen Seite des Greifkopfes (4) verteilt sind, um sich auf der lateralen Seite aller Produkte (101) der seitlichen Reihe von Produkten (101) aufliegend anzuordnen.

3. Entpalettisiermaschine nach Anspruch 1 oder 2, **dadurch gekennzeichnet, dass** sie zusätzlich Folgendes umfasst: einen Auslassförderer (6), der angepasst ist, um die losen Produkte an die Außenseite der Maschine zu tragen/zu transferieren, und sich unterhalb der Referenzebene (P) neben dem vertikalen Korridor befindet, in den die Produkttransferplattform (3) eingreift, so dass ihre Produktauflage- und/oder -zuführebene neben der beweglichen Produkttransferplattform (3) in der Entladeposition angeordnet ist; und eine Produktverschiebebaugruppe (7), die angepasst ist, um die Produkte (101) von der beweglichen Produkttransferplattform (3) zu dem Auslassförderer (6) zu bewegen, wenn sich die bewegliche Produkttransferplattform (3) in der Entladeposition befindet.

4. Entpalettisiermaschine nach Anspruch 3, wobei die Produktverschiebebaugruppe (7) Folgendes umfasst: eine Querschieberschaufel (8), das in horizontaler Position neben dem vertikalen Korridor angeordnet ist, in den die bewegliche Produkttransferplattform (3) eingreift; und Bewegungsmittel (9), die angepasst sind, um die Schieberschaufel (8) in der Entladeposition horizontal über die bewegliche Produkttransferplattform (3) zu bewegen, um die Produkte (101), die auf der beweglichen Produkttransferplattform (3) ruhen, von der beweglichen Produkttransferplattform (3) bis zum Auslassförderer (6) zu schieben.

5. Entpalettisiermaschine nach Anspruch 4, wobei die Schieberschaufel (8) auf der gegenüberliegenden Seite des vertikalen Korridors angeordnet ist, in den die bewegliche Produkttransferplattform (3) in Bezug auf den Auslassförderer (6) eingreift, und die Bewegungsmittel (9) angepasst sind, um die Schieberschaufel (8) horizontal durch den vertikalen Korridor zu bewegen.

6. Entpalettisiermaschine nach einem der vorhergehenden Ansprüche, wobei die Maschine mit einem starren Traggestell (10) versehen ist, das so ausgelegt ist, dass es stabil auf dem Boden ruht und optional an diesem verankert wird; und wobei zumindest die bewegliche Produkttransferplattform (3) und der Greifkopf (4) beweglich auf dem starren Traggestell (10) montiert sind.

7. Entpalettisiermaschine nach Anspruch 6, wobei das starre Traggestell (10) eine käfigartige Struktur aufweist und die Hubplattform (2) vertikal innerhalb des starren Traggestells (10) bewegbar ist.

8. Entpalettisiermaschine nach Anspruch 6 oder 7, wobei der Greifkopf (4) umfasst: einen Stützquerträger (30), der sich horizontal rittlings über zwei horizontale Träger (29) des Traggestells (10) erstreckt und dessen zwei Enden gleitend an den gleichen horizontalen Träger (29) befestigt sind, um sich entlang der horizontalen Träger (29) bewegen zu können, während er parallel zu sich selbst bleibt; wobei die Vakuumgreifmittel (5) an einer Seite des Stützquerträgers (30) befestigt sind, um im Wesentlichen horizontal vorzustehen, um sich gegen die laterale Seite der Produkte (101) anliegend anzuordnen, die sich auf der Höhe der Referenzebene (P) befinden.

9. Entpalettisiermaschine nach Anspruch 8, wobei die Vakuumgreifmittel (5) eine Vielzahl/Mehrzahl von Saugnäpfen (31) umfassen, die an einer Seite des Stützquerträgers (30) befestigt sind, um im Wesentlichen horizontal und nebeneinander vorzustehen und mit einer Luftansaugleitung verbunden sind, um durch Vakuum an der Oberfläche der Produkte (101), auf der sie aufliegen, haften zu können.

10. Entpalettisiermaschine nach Anspruch 9, wobei die Saugnäpfe (31) des Greifkopfes (4) im Wesentlichen gleichmäßig auf der Seite eines Saugnäpfe tragenden Längsträgers (32) verteilt sind, der wiederum an dem Stützquerträger (30) mit der Fähigkeit befestigt ist, sich vertikal in Bezug auf den Stützquerträger (30) zu verschieben, während er parallel zu sich selbst bleibt; wobei der Greifkopf (4) zusätzlich mit einer Betätigungsvorrichtung (33) versehen ist, die angepasst ist, um den die Saugnäpfe tragenden Längsträger (32) in Bezug auf den Stützquerträger (30) anzuheben und/oder abzusenken, um den Abstand des die Saugnäpfe tragenden Längsträgers (32) von der Referenzebene (P) zu variieren.

11. Entpalettisiermaschine nach Anspruch 8, wobei die Vakuumgreifmittel (5) umfassen: einen innen hohlen Hilfsträger (200), der sich im Wesentlichen parallel und benachbart zu dem Stützquerträger (30) erstreckt und fest an dem Stützquerträger (30) befestigt ist; und eine Matte aus weichem und elastisch verformbarem Material (201), die fest an der Seite des Hilfsträgers (200) auf der gegenüberliegenden Seite in Bezug auf den Stützquerträger (30) befestigt ist; wobei die Matte aus weichem und elastisch verformbarem Material (201) mit einer Reihe/Mehrzahl von Querdurchgangskanälen (202) versehen ist, die an dem Hilfsträger (200) enden und mit dem inneren Hohlraum des Hilfsträgers (200) kommunizieren; wobei der innere Hohlraum (200a) des Hilfsträgers (200) mit einer Luftansaugleitung verbunden ist, um auf einem Druck gehalten werden zu können, der niedriger als der Umgebungsdruck ist.

12. Entpalettisiermaschine nach Anspruch 11, wobei der Hilfsträger (200) an dem Stützquerträger (30) mit der Fähigkeit befestigt ist, sich vertikal in Bezug auf den Stützquerträger (30) zu bewegen, während er parallel zu sich selbst bleibt; wobei der Greifkopf (4) ferner mit einer Betätigungsvorrichtung (33) versehen ist, die angepasst ist, um den Hilfsträger (200) in Bezug auf den Stützquerträger (30) anzuheben und/oder abzusenken, um den Abstand des Hilfsträgers (200) von der Referenzebene (P) zu variieren.

13. Entpalettisiermaschine nach einem der Ansprüche 7 bis 12, wobei die Vakuumgreifmittel (5) an dem Stützquerträger (30) mit der Fähigkeit zum Drehen/Schwenken um eine Referenzachse (R) im Wesentlichen parallel zur Längsachse des Stützquerträgers (30) befestigt sind.

14. Entpalettisiermaschine nach einem der Ansprüche 8 bis 12, wobei der Greifkopf (4) zusätzlich einen oder mehrere Plattenschiebefortsätze (39) beinhaltet, die angepasst sind, um selektiv die Verlegeebene der Stützplatte oder -schale (103) der oberen Schicht der Palette (100) zu erreichen, um auf der Seitenkante der Stützplatte oder -schale (103) zu ruhen.

15. Entpalettisiermaschine nach einem der Ansprüche 6 bis 14, wobei die bewegliche Produkttransferplattform (3) vertikal verschiebbar an einem ersten Paar vertikaler Ständer (11) des starren Traggestells (10) befestigt ist.

16. Entpalettisiermaschine nach einem der Ansprüche 6 bis 15, wobei die Hubplattform (2) vertikal verschiebbar an einem zweiten Paar vertikaler Ständer (11) des starren Traggestells (10) befestigt ist.

17. Entpalettisiermaschine nach Anspruch 16, wobei die Hubplattform (2) Folgendes umfasst: einen Stützquerträger (12), der sich horizontal rittlings auf dem zweiten Paar vertikaler Ständer erstreckt und dessen zwei Enden verschiebbar an den gleichen vertikalen Ständern (11) befestigt sind, um sich entlang der vertikalen Ständer (11) bewegen zu können, während er parallel zu sich selbst bleibt; und ein Paar Zinken (13), die sich freitragend und horizontal von dem Stützquerträger (12) erstrecken, während sie im Wesentlichen parallel und zueinander ausgerichtet bleiben.

18. Entpalettisiermaschine nach einem der Ansprüche 6 bis 17, wobei die Bewegungsmittel (9) der Produktverschiebebaugruppe (7) an dem starren Traggestell (10) befestigt sind und Folgendes umfassen: ein Paar Gelenkarme (45) mit pantographischer Bewegung, die an der Oberseite eines Querträgers (40) des starren Traggestells (10) beweglich montiert sind, um sich in einer im Wesentlichen horizontalen Ebene scherenartig öffnen/spreizen zu können, und die die Querschieberschaufel (8) direkt tragen; und einen Servomotor (46), der mechanisch mit beiden Gelenkarmen (45) verbunden ist, um sie synchron öffnen und schließen zu können.

## Revendications

1. Machine de dépalettisation (1) comprenant une plate-forme élévatrice (2) qui est conçue pour recevoir, reposant sur celle-ci, la palette à déballer (100) et est conçue pour se déplacer verticalement de façon à soulever, depuis le sol, la palette à déballer (100) et aligner la couche supérieure de la palette avec un plan de référence surélevé (P) ;
la machine de dépalettisation étant **caractérisée par le fait qu'elle** comprend en outre : une plate-forme de transfert de produits (3) mobile qui est dimensionnée de façon à recevoir/accueillir une unique rangée de produits (101) provenant de la palette (100) stationnaire sur la plate-forme élévatrice (2), et est verticalement mobile le long de la plate-forme élévatrice (2) entre une position de chargement dans laquelle la plate-forme de transfert de produits (3) est alignée avec ledit plan de référence (P) et est capable de charger/recevoir une rangée de produits (101), et une position de déchargement dans laquelle la plate-forme de transfert de produits (3) mobile est située espacée sous ledit plan de référence (P) et est capable de décharger la rangée de produits (101) précédemment chargée ; et une tête de préhension (4) qui se trouve sur ledit plan de référence (P), est munie de moyens de préhension (5) conçus pour saisir et tenir fermement les produits (101) d'une rangée de produits, et est mobile vers l'avant et vers l'arrière sur ledit plan de référence (P) entre une première position opérationnelle dans laquelle la tête de préhension (4) est située à côté de la plate-forme élévatrice (2), sensiblement verticalement alignée avec la plate-forme de transfert de produits (3), et une seconde position opérationnelle dans laquelle la tête de préhension (4) est verticalement alignée avec la plate-forme élévatrice (2), et est agencée de manière adjacente aux produits (101) en formant une rangée latérale de la couche supérieure de la palette, de sorte que les moyens de préhension (5) puissent saisir et tenir les produits (101) de ladite rangée latérale ;
la tête de préhension (4) étant latéralement munie de moyens de préhension par le vide (5) qui sont conçus pour s'agencer en butée contre le côté latéral des produits (101) de ladite rangée latérale de produits, sont capables de tenir ces mêmes produits (101) par préhension sur les côtés de ces mêmes produits (101), et sont mobiles verticalement sur ladite tête de préhension (4).

2. Machine de dépalettisation selon la revendication 1, dans laquelle lesdits moyens de préhension par le vide (5) sont répartis sur le côté latéral de la tête de préhension (4), de façon à s'agencer en reposant sur le côté latéral de tous les produits (101) de ladite rangée latérale de produits (101).

3. Machine de dépalettisation selon la revendication 1 ou 2, **caractérisée par le fait qu'**elle comprend en outre : un convoyeur de sortie (6) qui est conçu pour transporter/transférer les produits en vrac (101) vers l'extérieur de la machine, et est situé sous ledit plan de référence (P), à côté du couloir vertical mis en prise par la plate-forme de transfert de produits (3), de sorte que son plan de repos et/ou d'acheminement de produits soit agencé à côté de la plate-forme de transfert de produits (3) mobile dans ladite position de déchargement ; et un ensemble de décalage de produits (7) qui est conçu pour décaler les produits (101) de la plate-forme de transfert de produits (3) mobile au convoyeur de sortie (6) lorsque la plate-forme de transfert de produits (3) mobile est située dans ladite position de déchargement.

4. Machine de dépalettisation selon la revendication 3, dans laquelle l'ensemble de décalage de produits (7) comprend : une lame-poussoir (8) transversale qui est agencée en position horizontale à côté du couloir vertical mis en prise par la plate-forme de transfert de produits (3) mobile ; et des moyens de déplacement (9) qui sont conçus pour déplacer horizontalement la lame-poussoir (8) pardessus la plate-forme de transfert de produits (3) mobile dans la position de déchargement, de façon à pousser les produits (101) reposant sur la plate-forme de transfert de produits (3) mobile, de la plate-forme de transfert de produits (3) mobile jusqu'au convoyeur de sortie (6).

5. Machine de dépalettisation selon la revendication 4, dans laquelle la lame-poussoir (8) est agencée sur le côté opposé du couloir vertical mis en prise par la plate-forme de transfert de produits (3) mobile par rapport au convoyeur de sortie (6), et les moyens de déplacement (9) sont conçus pour déplacer la lame-poussoir (8) horizontalement à travers ledit couloir vertical.

6. Machine de dépalettisation selon l'une quelconque des revendications précédentes, dans laquelle la machine est muni d'une ossature de support rigide (10) qui est conçue pour reposer de manière stable sur le sol, et facultativement d'être ancrée au sol ; et dans laquelle au moins la plate-forme de transfert de produits (3) mobile et la tête de préhension (4) sont montées mobiles sur ladite ossature de support rigide (10).

7. Machine de dépalettisation selon la revendication 6, dans laquelle l'ossature de support rigide (10) possède une structure de type cage et la plate-forme élévatrice (2) est mobile verticalement à l'intérieur de ladite ossature de support rigide (10).

8. Machine de dépalettisation selon la revendication 6 ou 7, dans laquelle la tête de préhension (4) comprend : une traverse de support (30) qui s'étend horizontalement à cheval sur deux poutres horizontales (29) de ladite ossature de support (10), et dont les deux extrémités sont fixées de manière coulissante à ces mêmes poutres horizontales (29) de façon à être apte à se déplacer le long des poutres horizontales (29) tout en restant parallèle à elle-même ; les moyens de préhension par le vide (5) étant fixés sur un côté de la traverse de support (30), de façon à dépasser sensiblement horizontalement afin de s'agencer en butée contre le côté latéral des produits (101) qui sont à la hauteur du plan de référence (P).

9. Machine de dépalettisation selon la revendication 8, dans laquelle les moyens de préhension par le vide (5) comprennent une pluralité/multitude de ventouses (31) qui sont fixées sur un côté de la traverse de support (30) de façon à dépasser sensiblement horizontalement et les unes à côté des autres, et sont raccordées à une ligne d'aspiration d'air de façon à être aptes à adhérer par le vide sur la surface des produits (101) sur lesquels elles reposent.

10. Machine de dépalettisation selon la revendication 9, dans laquelle les ventouses (31) de la tête de préhension (4) sont réparties d'une manière sensiblement uniforme sur le côté d'un longeron porteur de ventouses (32) qui, à son tour, est fixé sur ladite traverse de support (30) avec la capacité de se décaler verticalement par rapport à la traverse de support (30) tout en restant parallèle à lui-même ; la tête de préhension (4) étant en outre munie d'un dispositif actionneur (33) qui est conçu pour lever et/ou abaisser le longeron porteur de ventouses (32) par rapport à la traverse de support (30), de façon à faire varier la distance du longeron porteur de ventouses (32) par rapport audit plan de référence (P).

11. Machine de dépalettisation selon la revendication 8, dans laquelle les moyens de préhension par le vide (5) comprennent : une poutre auxiliaire (200) creuse à l'intérieur qui s'étend de manière sensiblement parallèle et adjacente à ladite traverse de support (30), et est fermement fixée à ladite traverse de support (30) ; et un tapis de matériau mou et élastiquement déformable (201), qui est fermement fixé sur le côté de la poutre auxiliaire (200) sur le côté opposé par rapport à la traverse de support (30) ; le tapis de matériau mou et élastiquement déformable (201) étant muni d'une série/multitude de conduits traversants transversaux (202) qui se terminent au niveau de la poutre auxiliaire (200) et communiquent avec la cavité interne de ladite poutre auxiliaire (200) ; la cavité interne (200a) de la poutre auxiliaire (200) étant raccordée à une ligne d'aspiration d'air de façon à être apte à être maintenue à une pression inférieure à la pression ambiante.

12. Machine de dépalettisation selon la revendication 11, dans laquelle la poutre auxiliaire (200) est fixée sur la traverse de support (30) avec la capacité de se déplacer verticalement par rapport à ladite traverse de support (30) tout en restant parallèle à elle-même ; la tête de préhension (4) étant par ailleurs munie d'un dispositif actionneur (33) qui est conçu pour lever et/ou abaisser la poutre auxiliaire (200) par rapport à la traverse de support (30), de façon à faire varier la distance de la poutre auxiliaire (200) par rapport audit plan de référence (P).

13. Machine de dépalettisation selon l'une quelconque des revendications 7 à 12, dans laquelle les moyens de préhension par le vide (5) sont fixés sur ladite traverse de support (30) avec la capacité de tourner/pivoter autour d'un axe de référence (R) sensiblement parallèle à l'axe longitudinal de la traverse de support (30).

14. Machine de dépalettisation selon l'une quelconque des revendications 8 à 12, dans laquelle la tête de préhension (4) inclut en outre un ou plusieurs appendices de poussée de planche (39) qui sont conçus pour sélectivement atteindre le plan de disposition de la planche ou du plateau de support (103) de la couche supérieure de la palette (100), de façon à reposer sur le bord latéral de la planche ou du plateau de support (103).

15. Machine de dépalettisation selon l'une quelconque des revendications 6 à 14, dans laquelle la plate-forme de transfert de produits (3) mobile est fixée d'une manière apte à coulisser verticalement sur une première paire de montants verticaux (11) de l'ossature de support rigide (10).

16. Machine de dépalettisation selon l'une quelconque des revendications 6 à 15, dans laquelle la plate-forme élévatrice (2) est fixée d'une manière apte à coulisser verticalement sur une seconde paire de montants verticaux (11) de l'ossature de support rigide (10).

17. Machine de dépalettisation selon la revendication 16, dans laquelle la plate-forme élévatrice (2) comprend : une traverse de support (12) qui s'étend horizontalement à cheval sur ladite seconde paire de montants verticaux, et dont les deux extrémités sont fixées d'une manière apte à coulisser sur ces mêmes montants verticaux (11), de façon à être apte à se déplacer le long des montants verticaux (11) tout en restant parallèle à elle-même ; et une paire de griffes (13) qui s'étendent en porte-à-faux et horizontalement à partir de la traverse de support (12) tout en restant sensiblement parallèles et alignées les unes avec les autres.

18. Machine de dépalettisation selon l'une quelconque des revendications 6 à 17, dans laquelle les moyens de déplacement (9) de l'ensemble de décalage de produits (7) sont fixés sur ladite ossature de support rigide (10) et comprennent : une paire de bras articulés (45) dotés d'un mouvement de pantographe, qui sont montés mobiles sur le dessus d'une poutre transversale (40) de l'ossature de support rigide (10) de façon à être aptes à s'ouvrir/s'écarter d'une manière de type ciseaux, sur un plan sensiblement horizontal, et qui portent directement ladite lame-poussoir (8) transversale ; et un servomoteur (46) qui est mécaniquement raccordé aux deux bras articulés (45) de façon à être apte à les ouvrir et les fermer d'une manière synchronisée.
